# EUROPEAN PATENT SPECIFICATION

(11) **EP 2 281 128 B1**
(45) Date of publication and mention of the grant of the patent: **28.08.2019**
(21) Application number: 08741680.6
(22) Date of filing: 28.04.2008
(51) Int. Cl.: F16G 5/16, C22C 38/00

(54) **DRIVE BELT RING COMPONENT AND MANUFACTURING METHOD AND MARAGING STEEL BASE MATERIAL THEREFOR**
METALLRING FÜR ANTRIEBSRIEMEN UND VERFAHREN ZUR HERSTELLUNG UND BASISMATERIAL AUS MARTENSITAUSHÄRTENDER STAHL DAFÜR
COMPOSANT ANNULAIRE POUR COURROIE D'ENTRAÎNEMENT, PROCÉDÉ DE FABRICATION ET MATÉRIAU DE BASE D'ACIER À TREMPE SECONDAIRE MARTENSITIQUE POUR CE COMPOSANT

(43) Date of publication of application: 09.02.2011
(73) Proprietor: Robert Bosch GmbH, 70442 Stuttgart (DE)
(72) Inventor: PENNINGS, Bert, NL-5052 CH Goirle (NL)
(74) Representative: Plevier, Gabriël Anton Johan Maria
(86) International application number: PCT/NL2008/050259
(87) International publication number: WO 2009/134119

(56) References cited:
- EP-A- 1 055 738
- EP-A- 1 094 121
- EP-A- 1 111 080
- EP-A- 1 176 224
- EP-A- 1 284 174
- WO-A-2005/111253
- WO-A-2006/054885
- WO-A-2006/104375
- WO-A-2007/145502
- US-B1- 6 309 474

## Description

The present invention relates to an endless, thin and flexible metal band, which band is typically incorporated in a drive belt for power transmission between two adjustable pulleys of the well-known continuously variable transmission or CVT applied in motor vehicles. At least in relation to its application in the drive belt such band is also referred to as the ring component thereof. The invention also relates to a manufacturing method and maraging steel, i.e. alloying composition thereof, suited for such a ring component.

In a particular type of drive belt, which is also known as a pushbelt, a number of such rings are incorporated in at least one, but typically two laminated, i.e. mutually radially nested sets thereof. The known pushbelt further comprises a number of transverse metal elements that are slidably mounted on such band set or sets. In the pushbelt application thereof, the state of the art rings are produced from maraging steel, which type of steel combines, amongst others, a comparatively favourable possibility to weld and plastically deform the material with the characteristics of great tensile strength and good resistance against both abrasive wear and bending and/or tensile stress fatigue, at least after the appropriate heat treatment thereof.

The known rings are provided with a fair hardness of the core material for realising the properties of good tensile, yield and bending strength combined with a high resistance against metal fatigue, which ring core is encased in a substantially harder and thus wear resistant outer surface layer of the ring material. The said hard surface layer is provided with a maximum thickness to limit the internal ring stress and to provide the ring with a sufficient elasticity to allow longitudinal bending as well as resistance against fatigue fracture. Of course, all of these material characteristics are very significant in the drive belt application of the rings, because of the numerous number of load and bending cycles it is subjected to during the service life span thereof. More in particular, the rings are normally provided with core hardness of more than 550 HV1.0 and with a surface hardness of at least 900 HV0.1 up to around 1000 HV0.1. It is uniformly accepted in the art that the said core hardness should at the very least amount to more than 500 HV1.0 in the above drive belt application thereof.

Examples of such state of the art are provided by the European patent publications EP 1 111 080 A and EP 1 176 224 A, as well as by the United States patent US 6 309 474 B1, which also disclose various maraging steel alloying compositions for the rings and specifications of the ageing and nitriding heat treatments thereof.

To achieve the afore-mentioned minimum material hardness values, without compromising the ductility of the material, normally a maraging steel is applied as the base material for the rings that is subjected to the heat treatments of ageing, i.e. (bulk) precipitation hardening, and of case hardening, more in particular nitriding, typically gas soft nitriding, of the rings. A well known and predominantly applied base material in this respect has an alloying composition comprising 17 to 19 mass-% Nickel, 4 to 6 mass-% Molybdenum, between 8 and 10 mass-% Cobalt and 0.4 to 0.6 mass-% Titanium with balance Iron and with inevitable contaminations such as Oxygen, Nitrogen, Phosphorous, Silicon, etc. With this material the said minimum core or bulk hardness can indeed be obtained in the ageing heat treatment.

In particular the alloy elements of Titanium and Cobalt play an important, even enabling part in the precipitation hardening of the rings, since Titanium is the main precipitation forming element and since Cobalt catalyses the precipitate forming process. However, at the same time the presence of both said alloy elements has a substantial detrimental impact on the ring manufacturing cost. In respect of Cobalt such cost impact is direct, since Cobalt is a comparatively expensive alloy element in the known maraging steel base material composition. In respect of Titanium, however, such cost impact is more indirect and is caused by the effort that is required to keep down or suitably reduce the Nitrogen content of the ring base material in manufacturing. It being well known that Titanium and Nitrogen mutually react to form Titanium-nitride (TiN) inclusions in the ring base material, which are of course highly undesirable as they can locally increase ring stress levels and thus reduce the fatigue strength of the drive belt ring component.

Further it is noted that, in principle, the two heat treatments of ageing and nitriding can be performed simultaneously in a single process step, e.g. one pass through a properly heated furnace containing a suitable atmosphere, as is for example described on page 448 of the Metals Handbook, Vol. 1, 1978 of the American Society for Metals (ASM) in the chapter "Maraging Steels". However, specifically in the art of drive belt manufacture, it is generally acknowledged that for realising the optimum fatigue resistance, the ageing of the drive belt ring component takes considerably longer than the nitriding thereof. Otherwise, either the accepted lower production tolerance value for ring core hardness of at least 500 Vickers1.0 will not be achieved, or the nitrided surface layer will have become too brittle and/or too thick in relation to the ring thickness. Accordingly, in the presently available ring manufacturing methods, the nitriding heat treatment is without exception preceded by a separate process step of ageing, which is sometimes denoted as pre- or sub-ageing.

Examples of such known methods are provided in many publications, such as the Japanese patent publications JP-A-2002/038251, JP-A-2006/124757 and the European patent publication EP-A-1055738. The separate, successive process steps of (sub-)ageing and nitriding represent the current state of the art, as exclusively applied in practice. Of course, the desire to combine these two separately applied heat treatments into a single process step remains ever present, because of the reduced cost and complexity of the manufacturing method that can be realised thereby.

A known alternative to this contemporary ring manufacturing method is taught by the European patent publication EP-A-1753889, which mentions that, for a specific range of compositions of the maraging steel used for the drive belt ring component, the heat treatments ageing and nitriding can indeed be combined into a single process step. According to EP-A-1753889 such special maraging steel composition should comprise more than 10 mass-% Cobalt. The presence of Cobalt was found to enhance the precipitation hardening process, i.e. to speed up the core hardening of the rings, in particular to such an extent that the ageing heat treatment requires about the same time and temperature setting as the surface nitriding heat treatment. A ring core hardness of more than 570 HV1.0 was found to be attainable in this way, even without optimising the process settings of the combined heat treatment, i.e. by simply applying the existing process step of nitriding to the rings. However, as already noted, Cobalt is an expensive alloying element that, as such, disadvantageously raises the cost price of the steel ring base material. Hereby, any cost advantage gained by combining the said two heat treatments into one is at least partly undone.

The present invention aims to reduce the cost of the drive belt ring component, effectively without compromising the fatigue strength thereof. In his effort to realise such aim, Applicant has studied various ring base material compositions and various process settings of the known hardening heat treatments of ageing and nitriding.

At first sight the observations and test results that were obtained by Applicant in the above respect were not very promising. In fact it proved to be impossible to reduce in the maraging steel alloy either the Cobalt or the Titanium content and still obtain the desired core hardness by precipitation hardening, at least not without simultaneously increasing the absolute quantity of the respective other alloy element. Therefore, no or at least virtually no cost reduction of the base material appeared to be possible in this manner. However, not withstanding these discouraging first results, Applicant also performed fatigue strength experiments with such test pieces, which unexpectedly yielded very similar results, i.e. fatigue strength, for various values of the core hardness even below the accepted and conventionally applied lower limit thereof. In fact, a similar pull-pull tensile stress fatigue strength was measured for test pieces having a core hardness of more than 500 HV1.0, i.e. the conventionally applied minimum requirement, as for test pieces having a core hardness of around 470 HV1.0. Even down to a core hardness of approximately 400 HV1.0 the resulting fatigue strength of a test piece was found to satisfy Applicant's criterion for the drive belt application thereof. The range between 450 and 475 HV1.0, more in particular the value of 0.47•10³ HV1.0 being considered to provide the optimum balance between the attainable cost reduction in terms of the base material composition of the rings or the processing thereof and the fatigue strength of the rings that is typically required for application thereof in the passenger car CVT. Thus, according to the present invention, the contemporary insight requiring a minimum ring core hardness value of 500 HV1.0, which sets a constraint on the applicable ring manufacturing methods and/or base material compositions, was surprisingly found to be unduly strict.

Based on the afore-mentioned experimental observation the general aim of reducing the cost of the drive belt ring component was found to be attainable after all and even in two separate ways.

Firstly, according to the present invention, the Cobalt content of the known base material for the drive belt ring component may simply be dropped to less than 8 mass-% and/or its Titanium content to less than 0.4 mass-%. Even though with such a new maraging steel alloy the resulting core hardness of the precipitation hardened rings will normally be less than 500 HV1.0, the ultimate fatigue strength of the rings still is satisfactory.

More in particular, the invention relates to an alloying composition or maraging steel comprising between 4 and 7 mass-% Cobalt, between 0.2 and 0.3 mass-% Titanium, the composition further comprising 17 to 19 mass-% Nickel and 4 to 6 mass-% Molybdenum with balance Iron. Alternatively, the invention relates to an alloying composition or maraging steel comprising less than 0.1 mass-% Titanium and between 6 and 9.5 mass-%, preferably between 7 and 8 mass-% Cobalt, the composition likewise further comprising 17 to 19 mass-% Nickel and 4 to 6 mass-% Molybdenum with balance Iron. In all of the former alloying compositions a sufficient precipitation hardening capability is retained for realising the ring core hardness value that is presently determined as being sufficient for the drive belt application of such ring.

Secondly, according to the present invention, a ring core hardness value in the range between 400 and 500 HV1.0 is already attainable in the known process step of nitriding alone, i.e. without having to include the separate process step pre- or sub-ageing the ring in the overall manufacturing process and without having to use a special, i.e. highly alloyed maraging steel. Indeed, even the conventionally applied maraging steel was found to be suitable in this respect, which steel has a basic composition comprising 17 to 19 mass-% Nickel, 4 to 6 mass-% Molybdenum, 0.4 to 0.6 mass-% Titanium and less than 10 mass-% Cobalt, preferably between 8.5 and 9.5 mass-%, with balance Iron and with inevitable contaminations such as Oxygen, Nitrogen, Phosphorous, Silicon, etc. The nitriding process step in this case being performed at a temperature between 400 and 500 °C for 30 to 75 minutes in a controlled process atmosphere containing at least 10 and up to 50 volume-% Ammonia gas and preferably several (e.g. between 3 and 10) volume-% Hydrogen with balance Nitrogen gas.

Surprisingly a bonus effect was observed by Applicant in the above single stage/step heat treatment, i.e. wherein the process step of nitriding is not preceded by the process step of ageing in an inert process atmosphere like in the conventional ring manufacturing process, namely that the nitriding process occurs much more efficiently. Apparently, either the catalytic and/or reactive properties for ammonia dissociation of the outer surface of the rings, its capability to absorb Nitrogen atoms or the reactivity of the steel matrix to from nitrides is substantially reduced during (sub-)aging prior to nitriding. It was thus found that the process according to the present invention is particularly suited to obtain a high surface hardness of 1050 HV0.1 or more in comparison with the conventionally typically obtained surface hardness of approximately 1000 HV0.1. Even a surface hardness of 1070 HV0.1 was found to be obtainable at appropriately selected process settings of the presently proposed process step of combined aging and nitriding. In this respect it is remarked that a high surface hardness is highly advantageous in the drive belt application of the rings, since it provides the rings with an excellent durability, in particular in terms of wear resistance. Accordingly, the invention additionally relates to and provides for a method for manufacturing a ring having a surface hardness of more than 1050 HV0.1, as well as to a thus obtained ring.

The ring according to the invention can be produced efficiently and has a good resistance against metal fatigue as well as an excellent resistance against wear during use of the drive belt wherein it is applied.

The basic principles of the invention will now be elucidated by way of example, along a drawing in which:
Figure 1 provides a schematically depicted example of the well-known continuously variable transmission that is provided with a drive belt incorporating a ring component,
Figure 2 is a section of the belt shown in perspective,
Figure 3 figuratively represents the known process step of combined ring aging and nitriding the drive belt ring component, being only a part of the known overall manufacturing method thereof.
Figure 4 is a diagram providing experimental results of a fatigue strength test performed on several maraging steel test pieces.

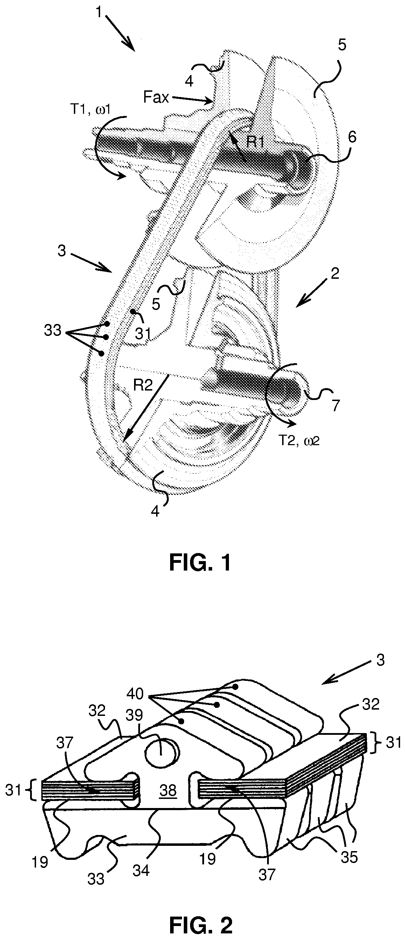

Figure 1 shows the central parts of a known continuously variable transmission or CVT that is commonly applied in the drive-line of motor vehicles between the engine and the drive wheels thereof. The transmission comprises two pulleys 1, 2, each provided with two conical pulley discs 4, 5, where between a predominantly V-shaped pulley groove is defined and whereof one disc 4 is axially moveable along a respective pulley shaft 6, 7 over which it is placed. A drive belt 3 is wrapped around the pulleys 1, 2 for transmitting a rotational movement ω and an accompanying torque T from the one pulley 1, 2 to the other 2, 1.

The transmission generally also comprises activation means that impose on the said at least one disc 4 an axially oriented clamping force Fax directed towards the respective other pulley disc 5 such that the belt 3 is clamped there between. Also, a speed ratio of the transmission is thereby determined, which hereinafter is defined as the ratio between the rotational speed of the driven pulley 2 and the rotational speed of the driving pulley 1.

An example of a known drive belt 3 is shown in more detail figure 2 in a section thereof, which belt 3 incorporates an endless tensile means 31. In this particular example, the endless tensile means 31 is composed of two sets of flat, i.e. band-like, flexible rings 32. The belt 3 further comprises a multitude of plate-like transverse elements 33 that are in contact with and held together by the tensile means 31. The elements 33 take-up the said clamping force Fax, such when an input torque Tin is exerted on the so-called driving pulley 1, friction between the discs 4, 5 and the belt 3, causes a rotation of the driving pulley 1 to be transferred to the so-called driven pulley 2 via the likewise rotating drive belt 3.

During operation in the CVT the belt 3 and in particular its ring component(s) 32 is (are) subjected to a cyclically varying tensile and bending stresses, i.e. a fatigue load. Typically the resistance against fatiguing or fatigue strength of the ring component 32 thus determines the functional life span of the drive belt 3 at a given torque T to be transmitted thereby. Therefore, it has been a long standing general aim in the development of the drive belt manufacturing method to realise a required ring fatigue strength at minimum combined material and processing cost.

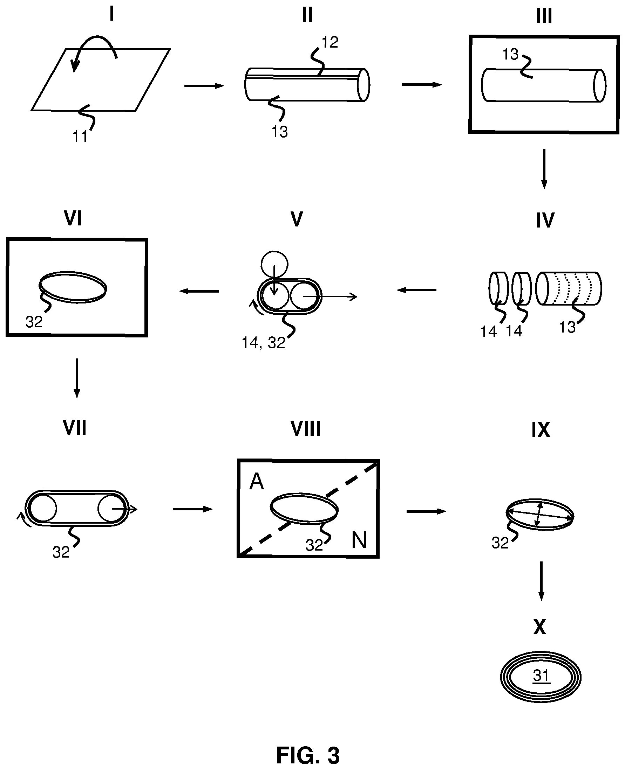

Figure 3 illustrates the presently relevant part of the known manufacturing method for the drive belt ring component 32 as is practised since the early years of drive belt production, wherein the separate process steps are indicated by way of Roman numerals. In a first process step I a sheet 11 of base material is bent into a cylindrical shape, whereby the sheet ends 12 that meet each other are welded together in a second process step II to form a tube 13. In a third step III of the process the tube 13 is annealed. Thereafter, in a fourth process step IV the tube 13 is cut into a number of hoops 14, which are subsequently -process step five V- rolled and elongated to a required thickness between 0.1 and 0.2 mm in the end product, typically about 185 µm. After rolling the hoops 14 are usually referred to as rings 32.

The rings 32 are subjected to a further annealing process step VI to remove the internal stresses introduced during rolling. Thereafter, in a seventh process step VII, the rings 32 are calibrated, i.e. they are mounted around two rotating rollers and stretched to a predefined circumference length. In this seventh process step VII, also an internal stress distribution is imposed on the rings 32. In the subsequent eighth step VIII of the known process the rings 32 undergo two heat treatments that largely determine the material properties of the end product rings 32. Firstly, the rings 32 are precipitation hardened, i.e. aged, at elevated temperature in an oven containing nitrogen gas atmosphere (process step VIII-A) and, secondly, the rings 32 are nitrided, i.e. case hardened, at elevated temperature in an oven containing both nitrogen and ammonia gas (process step VIII-B), to provide additional hardness, as well as a compressive stress to the outer surface layer of the rings 32. Hereby, typically it is aimed at a case hardened, i.e. nitrided surface layer having a thickness in the range from 20 to 40 µm.

These known and currently applied ring manufacturing methods and the contemporary technical insights pertaining thereto, can be directly linked to the standard industry requirements for the material characteristics of the end product ring 32 when applied in the drive belt 3, i.e. for realising a sufficient fatigue strength thereof. More in particular, a minimum ring core hardness of 500 HV1.0 is presently deemed an absolute minimum requirement in this respect.

Even so, Applicant has performed extensive fatigue strength investigations that specifically focussed on the relation between the core hardness of the material for the belt ring component 32 and the fatigue strength thereof. These investigations rather surprisingly yielded results that contradicted the existing requirement in this respect. In fact, the measured fatigue strength of the ring material measured by Applicant did not deteriorate excessively as the core hardness of the test pieces was decreased below 500 HV1.0, even down to a value of about 400 HV1.0. Accordingly, it was concluded that the existing technical insight in this respect amounts to nothing more than a rather persistent technical prejudice.

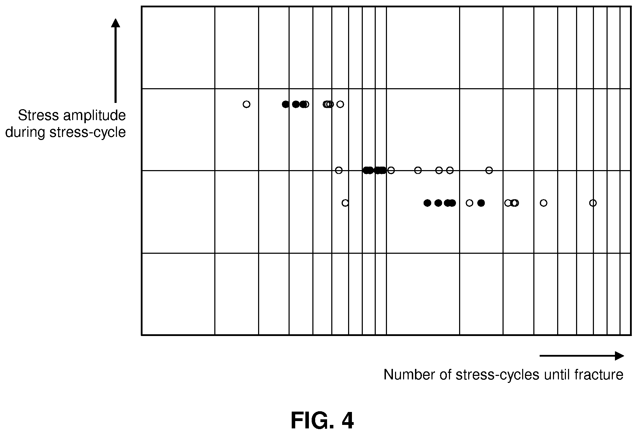

Figure 4 represents a graph depicting the results of a selection of a number of fatigue tests that underlie the present invention. It is well known to perform such individual fatigue tests by subjecting a test piece to a tensile stress that varies cyclically, in particular sinusoidally, between a minimum value σ_{MIN} and a maximum value σ_{MAX} until fracture. Hereby, the fatigue test is characterised and defined by the stress ratio (i.e. σ_{MIN}/σ_{MAX}) and the stress amplitude (i.e. [σ_{MAX}-σ_{MIN}]/2) of the said minimum and maximum stresses applied in the test. The number of stress cycles until fracture represents the fatigue strength of the test piece, which number is plotted on a logarithmic scale against the said stress amplitude in figure 4. Because of the typical and inherent spread in the measurement result of such a fatigue test, each test is normally (and has presently been) repeated several times with corresponding test pieces and at the same stress ratio and stress amplitude test settings. Each point in the graph of figure 4 thus represents a fatigue test result obtained by the above method, whereby the said stress ratio is kept constant between all tests performed. A linear fit through the plotted test results obtained from one type of test piece in figure 4 would represent the well known Woehler-curve.

Figure 4 contains the results obtained from two different types I and II of test pieces, each type I, II representing a particular end-product belt ring 32 that is characterised by having a core hardness of 570 HV1.0 and of 470 HV1.0 respectively. These two types I and II of test pieces are respectively represented by the circle outlines and the filled-in circles. The test pieces were respectively obtained by ageing and nitriding the same maraging steel base material, which is currently applied in the commercially available -and presently illustrated- drive belt 3 for automotive CVT applications, either in two successive process steps (type I) or in a single heat treatment (type II).

It follows clearly from figure 4 that the core hardness value of the respective test pieces I and II is of little influence on its ultimate fatigue strength, even though the resulting core hardness of the test pieces is quite different. Any such influence discernable from figure 4, being determined as statistically insignificant.

The invention will now be defined further along a set of claims and, apart from the preceding description, also relates to all details therein, and to all details and aspects in the discussed drawing which are directly and unambiguously derivable there from, at least by a man skilled in the art.

## Claims

1. Continuously variable transmission in a passenger car provided with a drive belt (3) including a metal ring (32) and a number of transverse elements (33) mounted on the ring (32), which ring (32) is made of a precipitation hardened maraging steel with a basic composition comprising 17-19 mass-% Nickel, 4-6 mass-% Molybdenum, and either
- less than 10 mass-% Cobalt and between 0.4 to 0.6 mass-% Titanium,
- less than 8 mass-% Cobalt and less than 0.4 mass-% Titanium,
- between 4 to 7 mass-% Cobalt and between 0.2 to 0.3 mass-% Titanium, or
- between 6 to 9.5 mass-% Cobalt and less than 0.1 mass-% Titanium,
with balance Iron, and which ring (32) is provided with a nitrided surface layer, **characterised in that** the hardness of the precipitation hardened core material of the ring (32) has a value between 400 and 500 HV1.0.

2. The continuously variable transmission in a passenger car according to the claim 1, **characterised in that** the core hardness of the ring (32) has a value in the range between 450 and 475 HV1.0.

3. The continuously variable transmission in a passenger car according to the claim 1, **characterised in that** the core hardness of the ring (32) has a value of 0.47•10³ HV1.0.

4. The continuously variable transmission in a passenger car according to the claim 1, 2 or 3, **characterised in that** the hardness of the nitrided surface layer material of the ring (32) amounts to 1050 HV0.1 or more, preferably more than 1070 HV0.1.

## Patentansprüche

1. Stufenloses Getriebe in einem Personenkraftwagen, das mit einem Antriebsriemen (3) versehen ist, der einen Metallring (32) und mehrere Querelemente (33) aufweist, die an dem Ring (32) montiert sind, wobei der Ring (32) aus einem per Ausscheidungshärtung gehärteten martensitaushärtbaren Stahl mit einer Grundzusammensetzung hergestellt ist, die 17 bis 19 Massen-% Nickel, 4 bis 6 Massen-% Molybdän und entweder
- unter 10 Massen-% Cobalt und zwischen 0,4 und 0,6 Massen-% Titan,
- unter 8 Massen-% Cobalt und unter 0,4 Massen-% Titan,
- zwischen 4 und 7 Massen-% Cobalt und zwischen 0,2 und 0,3 Massen-% Titan, oder
- zwischen 6 und 9,5 Massen-% Cobalt und unter 0,1 Massen-% Titan
umfasst, wobei der Rest Eisen ist, und wobei der Ring (32) mit einer nitrierten Oberflächenschicht versehen ist, **dadurch gekennzeichnet, dass** die Härte des per Ausscheidungshärtung gehärteten Kernmaterials des Rings (32) einen Wert zwischen 400 und 500 HV1.0 aufweist.

2. Stufenloses Getriebe in einem Personenkraftwagen nach Anspruch 1, **dadurch gekennzeichnet, dass** die Kernhärte des Rings (32) einen Wert im Bereich zwischen 450 und 475 HV1.0 aufweist.

3. Stufenloses Getriebe in einem Personenkraftwagen nach Anspruch 1, **dadurch gekennzeichnet, dass** die Kernhärte des Rings (32) einen Wert von 0,47×10³ HV1.0 aufweist.

4. Stufenloses Getriebe in einem Personenkraftwagen nach Anspruch 1, 2 oder 3, **dadurch gekennzeichnet, dass** die Härte des nitrierten Oberflächenschichtmaterials des Rings (32) mindestens 1050 HV0.1, bevorzugt über 1070 HV0.1 beträgt.

## Revendications

1. Transmission variable continue dans une voiture dotée d'une courroie de transmission (3) comprenant un anneau métallique (32) et un certain nombre d'éléments transversaux (33) montés sur l'anneau (32), lequel anneau (32) est constitué d'un acier à trempe secondaire martensitique durci par précipitation ayant une composition basique comprenant 17 à 19 % en masse de nickel, 4 à 6 % en masse de molybdène, et soit
- moins de 10 % en masse de cobalt et entre 0,4 et 0,6 % en masse de titane,
- moins de 8 % en masse de cobalt et moins de 0,4 % en masse de titane,
- entre 4 et 7 % en masse de cobalt et entre 0,2 et 0,3 % en masse de titane, soit
- entre 6 et 9,5 % en masse de cobalt et moins de 0,1 % en masse de titane,
le complément étant du fer, et lequel anneau (32) est pourvu d'une couche de surface nitrurée,
**caractérisée en ce que** la dureté du matériau de noyau durci par précipitation de l'anneau (32) a une valeur entre 400 et 500 HV1.0.

2. Transmission variable continue dans une voiture selon la revendication 1, **caractérisée en ce que** la dureté de noyau de l'anneau (32) a une valeur dans la plage entre 450 et 475 HV1.0.

3. Transmission variable continue dans une voiture selon la revendication 1, **caractérisée en ce que** la dureté de noyau de l'anneau (32) a une valeur de 0,47•10³ HV1.0.

4. Transmission variable continue dans une voiture selon la revendication 1, 2 ou 3, **caractérisée en ce que** la dureté du matériau de couche de surface nitrurée de l'anneau (32) représente 1 050 HV0.1 ou plus, de préférence plus de 1 070 HV0.1.
